# EUROPÄISCHE PATENTSCHRIFT

(11) **EP 3 145 755 B1**
(45) Veröffentlichungstag und Bekanntmachung des Hinweises auf die Patenterteilung: **26.09.2018**
(21) Anmeldenummer: 15720902.4
(22) Anmeldetag: 31.03.2015
(51) Int. Cl.: B60R 11/04, G03B 17/55, H04N 5/225, H05K 7/20

(54) **ASSISTENZSYSTEM EINES KRAFTFAHRZEUGS**
ASSISTANCE SYSTEM FOR A VEHICLE
SYSTÈME D'ASSISTANCE POUR UN VÉHICULE

(30) Priorität: 21.05.2014 DE 102014209611
(43) Veröffentlichungstag der Anmeldung: 29.03.2017
(73) Patentinhaber: Conti Temic microelectronic GmbH, 90411 Nürnberg (DE)
(72) Erfinder: MÜLLER, Gerhard, 88339 Bad Waldsee (DE)
(86) Internationale Anmeldenummer: PCT/DE2015/200213
(87) Internationale Veröffentlichungsnummer: WO 2015/176719

(56) Entgegenhaltungen:
- EP-A1- 1 473 193
- EP-A1- 1 473 193
- WO-A1-2009/135539
- DE-A1-102010 008 215
- DE-A1-102012 013 193

## Beschreibung

Die Erfindung betrifft ein Assistenzsystem eines Kraftfahrzeugs, mit einer ein Kameragehäuse aufweisenden Kamera.

Kraftfahrzeuge umfassen eine Vielzahl von Assistenzsystemen, wie z. B. Regensensoren, Spurhalteassistenten oder Müdigkeitswarnassistenten. Jedes derartige Assistenzsystem weist eine Kamera auf, mittels derer bei Betrieb die Frontscheibe, die Fahrbahn bzw. der Fahrer erfasst wird. Das erfasste Bild wird nach Abweichungen von einem bestimmten Soll-Zustand überprüft, und bei einem Vorhandensein desselben ein Aktor betätigt, wie ein Scheibenwischermotor, ein Motor zur Beeinflussung des Lenkeinschlags bzw. ein akustischer oder optischer Signalgeber.

Die Kamera umfasst üblicherweise eine innerhalb eines Kameragehäuses angeordnete Elektronik, mittels derer die erfassten Bilder verarbeitet werden. Aufgrund zunehmender Anforderungen an die Verarbeitung der erfassten Bilder nimmt die hierfür benötigte Rechenleistung zu, was zu einer erhöhten thermische Verlustleistung führt. Sofern die Kamera bereits einer Sonneneinstrahlung ausgesetzt ist, steigt somit die thermische Belastung der Kamera. Sofern sich die Kamera in einem Innenraum des Kraftfahrzeugs befindet, ist das Kameragehäuses aus optischen Gründen üblicherweise mittels einer Kappe abgedeckt, wie beispielsweise aus der gattungsbildenden DE 10 2010 008 215 A1 offenbart. Infolgedessen ist ein Abführen der innerhalb des Kameragehäuses entstehenden Hitze in den meist klimatisierten Innenraum unterbunden oder zumindest erschwert. Um einen zuverlässigen Betrieb gewährleisten zu können, müssen daher die einzelnen verwendeten Komponenten der Kamera eine vergleichsweise hohe maximale Betriebstemperatur aufweisen, was zu erhöhten Herstellungskosten führt.

Andernfalls ist es erforderlich, um eine Beschädigung der Kamera oder eine Fehlfunktion auszuschließen, die Kamera ganz oder teilweise abzuschalten und somit die Hitzeentwicklung zu begrenzen.

Kühlkörper und Kühlrippen am Kameragehäuse selbst sind zwar beispielsweise aus der DE 10 2012 013 193 A1 oder EP 1 473 193 A1 bekannt, eignen sich solche Vorrichtungen aber nicht ohne weiteres für ein Assistenzsystem, bei welchem das Kameragehäuse durch eine Kappe abgedeckt ist.

Der Erfindung liegt die Aufgabe zugrunde, ein besonders geeignetes Assistenzsystem eines Kraftfahrzeugs anzugeben, das insbesondere auch bei vergleichsweise hohen Temperaturen sicher betreibbar und geeigneterweise vergleichsweise kostengünstig herstellbar ist.

Diese Aufgabe wird erfindungsgemäß durch die Merkmale des Anspruchs 1 gelöst. Vorteilhafte Weiterbildungen und Ausgestaltungen sind Gegenstand der Unteransprüche.

Das Assistenzsystem ist beispielsweise ein Spurhalteassistent, eine Einparkhilfe, ein Müdigkeitswarnassistent, ein Regensensor, ein Fernlichtassistent, ein Notbremsassistent oder ein Verkehrszeichenerkennungsassistenzsystem. Das Assistenzsystem umfasst eine Kamera mit einem Kameragehäuse, wobei das Kameragehäuse beispielsweise an einer Frontscheibe des Kraftfahrzeugs befestigt ist oder sich zumindest im Bereich der Frontscheibe befindet. Die Kamera ist mittels einer, vorzugsweise schalenartig gestalteten, Kappe abgedeckt, die beispielsweise auf eine Interieurgestaltung des Kraftfahrzeugs abgestimmt ist. Zwischen der Kamera und der Kappe ist insbesondere ein Spalt gebildet, der mit Umgebungsluft befüllt ist. Mit anderen Worten ist die Kamera von der Kappe beabstandet. Mittels der Kappe werden etwaige elektrische Leitungen zur Bestromung oder Datenübermittlung von bzw. zur Kamera abgedeckt. Mit anderen Worten befinden sich derartige Leitungen zwischen dem Kameragehäuse und der Kappe. Beispielsweise ist die Kappe mittels einer Clipsverbindung an einer entsprechenden Aufnahme befestigt, an der geeigneterweise das Kameragehäuse angebunden ist, beispielsweise mittels Schrauben oder dergleichen. Die Kappe weist insbesondere ein vergleichsweise geringes Gewicht auf, zumindest ein geringeres als die Kamera. Folglich ist eine Befestigung mittels Clipsen ausreichend, wohingegen die vergleichsweise schwere Kamera mittels einer vergleichsweise robusten Befestigungsmethode an weiteren Bestandteilen des Kraftfahrzeugs, wie z.B. der Windschutzscheibe oder einem an dieser befestigen Kamerahalter, angebunden ist. Die Funktion der Kappe ist im Wesentlichen lediglich optischer Natur. Mit anderen Worten dient die Kappe lediglich dem Verbergen des Kameragehäuses. Mittels des Kameragehäuses hingegen werden weitere, innerhalb des Kameragehäuses angeordnete Komponenten der Kamera vor Beschädigungen oder Verschmutzungen geschützt. Diese Komponenten dienen insbesondere der Erfassung von Bildern und deren elektronischer Verarbeitung. Vorzugsweise ist das Kameragehäuse mit Ausnahme von etwaigen Lichteinfallsöffnungen geschlossen.

Das Kameragehäuse umfasst einen ersten Kühlkörper mit ersten Kühlrippen. Jede der ersten Kühlrippen weist beispielsweise einen rechteckigen Querschnitt auf, die mittels einer Platte verbunden sind, sodass der Kühlkörper im Wesentlichen einen kammförmigen Querschnitt aufweist. Hierbei sind die Kühlrippen vorzugsweise nach außen gerichtet, sodass diese zumindest teilweise eine äußere Begrenzung des Kameragehäuses bildet. Der erste Kühlkörper ist zweckmäßigerweise aus einem thermisch leitfähigen Material hergestellt, insbesondere aus einem Metall oder einem thermisch leitfähigen Kunststoff. Vorzugsweise besteht der erste Kühlkörper aus Aluminium oder einer Aluminiumlegierung, was zu einem verringerten Gewicht des Kameragehäuses führt. Zweckmäßigerweise ist das Aluminium mittels eines Lacks beschichtet und/oder eloxiert, der einen im Vergleich zu reinem Aluminium erhöhten thermischen Emissionskoeffizienten (Emissionsgrad) aufweist. Beispielsweise ist der thermische Emissionskoeffizient des ersten Kühlkörpers zwischen 0,7 und 0,95, insbesondere größer als 0,8 und geeigneterweise gleich 0,9. Aufgrund der Kühlrippen ist die Oberfläche des ersten Kühlkörpers vergrößert, so dass ein Wärmeaustausch und somit eine Wärmeabfuhr von der als Wärmequelle wirkenden Kamera verbessert ist.

Die Kappe weist einen zweiten Kühlkörper mit zweiten Kühlrippen auf. Zweckmäßigerweise ist der Querschnitt jeder der zweiten Kühlrippen rechteckförmig, wobei eines der Freienden an einer Platte des zweiten Kühlkörpers angebunden ist, sodass der zweite Kühlkörper einen im Wesentlichen kammartigen Querschnitt aufweist. Vorzugsweise besteht der zweite Kühlkörper aus einem thermisch leitfähigen Material, insbesondere aus einem Metall und geeigneterweise aus Aluminium, was zu einem vergleichsweise geringen Gewicht der Kappe führt. Zweckmäßigerweise ist das Aluminium mittels eines Lacks beschichtet und/oder eloxiert, der einen im Vergleich zu reinem Aluminium erhöhten thermischen Absorptionskoeffizienten aufweist. Alternativ besteht der zweite Kühlkörper aus einem Kunststoff, der geeigneterweise einen vergleichsweise hohen Absorptionskoeffizienten aufweist. Beispielsweise ist der thermische Absorptionskoeffizient des zweiten Kühlkörpers zwischen 0,7 und 0,95, insbesondere größer als 0,8 und geeigneterweise gleich 0,9. Die zweiten Kühlrippen sind zumindest teilweise zwischen den ersten Kühlrippen angeordnet. Mit anderen Worten greifen die ersten Kühlrippen und die zweiten Kühlrippen zumindest teilweise ineinander. Insbesondere ist jede der ersten Kühlrippen benachbart zu jeweils zwei zweiten Kühlrippen und jede zweite Kühlrippe benachbart zu zwei ersten Kühlrippen angeordnet. Hierbei ist zumindest eine der beiden seitlich äußersten zweiten Kühlrippen lediglich benachbart zu einer der ersten Kühlrippen. Mit anderen Worten wird die seitliche Begrenzung des Verbundes der beiden Kühlkörper mittels einer der zweiten Kühlrippen gebildet, oder zwei Begrenzungen des Verbundes werden mittels jeweils einer der zweiten Kühlrippen gebildet. Alternativ oder in Kombination hierzu wird zumindest eine seitliche Begrenzung mittels einer der ersten Kühlrippen gebildet. Vorzugsweise sind die beiden Kühlkörper einander zugewandt. Mit anderen Worten weisen die Freienden der zweiten Kühlrippen zu dem ersten Kühlkörper, und die Freienden der ersten Kühlrippen weisen zu dem zweiten Kühlkörper.

Aufgrund der Verwendung zweier Kühlkörper mit deren jeweiligen Kühlrippen ist die für den Wärmeaustauch mittels Wärmestrahlung verwendete Fläche zwischen dem Kameragehäuse und der Kappe vergrößert. Infolgedessen wird bei Betrieb vergleichsweise viel Wärme von dem Kameragehäuse auf die Kappe übertragen, von wo die Wärme vergleichsweise einfach an die Umgebung abgegeben werden kann. Insbesondere wird bei Betrieb die Kappe mittels Konvektion gekühlt, beispielsweise mittels einer Klimaanlage des Kraftfahrzeugs. Da die zweiten Kühlrippen zumindest teilweise zwischen den ersten Kühlrippen angeordnet sind, wird die Wärme jeder oder zumindest eines großen Teils der ersten Kühlrippen auf eine benachbarte zweite Kühlrippe abgestrahlt und nicht auf eine weitere erste Kühlrippe. Somit wird die in einer der zwischen den zweiten Kühlrippen angeordneten ersten Kühlrippe eingeleitete Wärme im Wesentlichen vollständig auf den zweiten Kühlkörper übertragen und folglich die Kamera vergleichsweise effizient gekühlt.

Geeigneterweise sind die ersten Kühlrippen parallel zu den zweiten Kühlrippen angeordnet, wobei die Kühlrippen z.B. in Längsrichtung des Kraftfahrzeugs verlaufen. Insbesondere ist der Querschnitt der beiden Kühlkörper hierbei senkrecht zur Anordnungsrichtung kammartig, wobei die Zinken mittels der jeweiligen Kühlrippen gebildet sind. Die Zinken greifen hierbei ineinander. Aufgrund der Parallelität der ersten und der zweiten Kühlrippen ist es ermöglicht, die zweiten Kühlrippen über eine vergleichsweise große Länge zwischen den ersten Kühlrippen anzuordnen. Folglich ist die Wärmeaustauschfläche, die zwischen dem ersten Kühlkörper und dem zweiten Kühlkörper gebildet ist, vergleichsweise groß, so dass der Wärmeaustausch verbessert ist.

Beispielsweise ist der erste Kühlkörper mittels einer ersten Gehäusehälfte des Kameragehäuses gebildet. Mit anderen Worten weist das Kameragehäuse die erste Gehäusehälfte auf, die zumindest teilweise den ersten Kühlkörper bildet. Infolgedessen ist die Anzahl benötigter Bauteile zur Erstellung des Kameragehäuses verringert, was zu einer Gewichts- und Kostenreduzierung führt. Zudem ist eine thermische Anbindung des ersten Kühlkörpers an weitere Bestandteile des Kameragehäuses nicht erforderlich, sodass ein etwaiger Hitzestau zwischen eben diesen Bestandteilen des Kameragehäuses unterbunden ist. Beispielsweise ist die erste Gehäusehälfte als Deckel ausgebildet, mittels dessen eine zweite Gehäusehälfte verschlossen wird.

Vorzugsweise ist eine Leiterplatte innerhalb des Kameragehäuses angeordnet, mittels derer bei Betrieb des Assistenzsystems insbesondere eine elektrische Schaltung zur Verarbeitung von mittels weiterer Bestandteile der Kamera erfassten Bilder erfolgt. Aufgrund der Positionierung der Leiterplatte innerhalb des Kameragehäuses, ist diese vor Umwelteinflüssen oder sonstigen Beschädigungen geschützt. Die Leiterplatte ist geeigneterweise in thermischem Kontakt mit der ersten Gehäusehälfte. Folglich wird bei einer Erwärmung der Leiterplatte die Hitze mittels der ersten Gehäusehälfte an den zweiten Kühlkörper abgegeben, sodass auch bei einer vergleichsweise hohen Verlustleistung einzelner Komponenten der Leiterplatte diese vergleichsweise effizient gekühlt wird. Insbesondere liegt die Leiterplatte an der ersten Gehäusehälfte an. Mit anderen Worten steht die Leiterplatte in direktem mechanischem Kontakt mit der ersten Gehäusehälfte, wobei insbesondere der Kontakt über einen vergleichsweise großen Abschnitt der Leiterplatte erfolgt. Beispielsweise beträgt der Bereich des direkten mechanischen Kontakts zwischen 5 % und 10 %, 15 % oder 20 % der Fläche der Leiterplatte. Zweckmäßigerweise liegt die Leiterplatte in einem Randbereich an der ersten Gehäusehälfte an. Folglich ist die Leiterplatte stabilisiert.

Beispielsweise ist das Kameragehäuse im Wesentlichen mittels der ersten und der zweiten Gehäusehälfte gebildet. Insbesondere ist die Leiterplatte zwischen der ersten und der zweiten Gehäusehälfte klemmfixiert. Mit anderen Worten liegt die Leiterplatte an der ersten und der zweiten Gehäusehälfte zumindest teilweise an, und zwischen diesen ist eine kraftschlüssige Verbindung realisiert. Vorzugsweise ist der Bereich der Anlage hierbei ein Randbereich der Leiterplatte. Aufgrund einer derartigen Anbindung sind keine weiteren Befestigungsmittel erforderlich, was zu einer Kostenersparnis führt. Zudem ist die Leiterplatte vergleichsweise sicher gehalten, weswegen das Assistenzsystem vergleichsweise robust ist. Zur Herstellung wird hierbei geeigneterweise die Leiterplatte auf einen Abschnitt einer der Gehäusehälften positioniert, insbesondere gelegt, und in einem weiteren Arbeitsschritt die verbleibende Gehäusehälfte entsprechend angeordnet. In einem sich daran anschließenden Arbeitsschritt werden die beiden Gehäusehälften miteinander verbunden und folglich die Leiterplatte befestigt.

Geeigneterweise umfasst die Kamera ein Optikmodul, das insbesondere ein Objektiv sowie einen Bildsensor aufweist, z. B. einen CCD- oder CMOS-Chip. Insbesondere ist der Bildsensor mittels des Objektivs abgedeckt oder zumindest teilweise umschlossen, so dass eine Verschmutzung und/oder ein Streulichteinfall auf den Bildsensor ausgeschlossen ist. Geeigneterweise ist hierbei der Bildsensor an einer weiteren Leiterplatte oder einem Träger befestigt. Das Optikmodul selbst, beispielsweise die weitere Leiterplatte, sofern diese vorhanden ist, ist in eine Buchse oder einen Stecker gesteckt, der auf der Leiterplatte montiert ist, die an der ersten Gehäusehälfte anliegt. Mittels der Buchse ist eine elektrische und/oder signaltechnische Verbindung zwischen dem Optikmodul und der Leiterplatte geschaffen. Aufgrund der Steckverbindung ist hierbei die Montage vergleichsweise einfach. Alternativ hierzu erfolgt die signaltechnische Kopplung des Optikmoduls mit der Leiterplatte mittels einer elektrischen Leitung, beispielsweise mittels eines Flachbandkabels.

Das Objektiv des Optikmoduls, sofern dieses vorhanden ist, weist beispielsweise eine Kunststofflinse oder eine Kombination aus zumindest einer Kunststoff- und einer Glaslinse auf. Geeigneterweise ist das Objektiv zumindest teilweise innerhalb einer Öffnung des Kameragehäuses positioniert, wobei die Öffnung insbesondere in die zweite Gehäusehälfte eingebracht ist, sofern diese vorhanden ist. Somit kann mittels des innerhalb des Kameragehäuses positionierten Bildsensors die Umgebung der Kamera erfasst werden. Beispielsweise ist zwischen dem Objektiv und dem Kameragehäuse ein Dichtungsring oder dergleichen angeordnet, so dass ein Eindringen von Fremdpartikeln durch die Öffnung ausgeschlossen ist. Alternativ hierzu ist zwischen dem Objektiv und der Begrenzung der Öffnung ein Spalt gebildet, was die Ausrichtung des Objektivs vereinfacht. Geeigneterweise ist die Öffnung in die zweite Gehäusehälfte des Kameragehäuses eingebracht. Mit anderen Worten ist die erste Gehäusehälfte frei von der Öffnung. Beispielsweise weist die Kamera zwei derartige Optikmodule auf, die zueinander beabstandet angeordnet sind. Folglich ist eine räumliche Auflösung der mittels der Optikmodule erfassten Umgebung ermöglicht.

Geeigneterweise ist die Kappe einstückig ausgestaltet. Mit anderen Worten ist der zweite Kühlkörper an den verbleibenden Bestandteilen der Kappe angeformt. Auf diese Weise ist der thermische Austausch zwischen dem zweiten Kühlkörper und den verbleibenden Bestandteilen der Kappe verbessert. Folglich ist eine Befestigung des zweiten Kühlkörpers an weiteren Bestandteilen nicht erforderlich. Zudem ist die Anzahl der Bauteile reduziert und eine Montage vereinfacht.

Beispielsweise liegen die ersten Kühlrippen an den zweiten Kühlrippen an. Mit anderen Worten sind die ersten Kühlrippen in direktem mechanischem Kontakt mit den zweiten Kühlrippen. Bevorzugt jedoch sind die ersten Kühlrippen zu den zweiten Kühlrippen beabstandet. Geeigneterweise ist hierbei der Abstand im Wesentlichen konstant. Auf diese Weise ist ein Toleranzausgleich zwischen dem ersten Kühlkörper und dem zweiten Kühlkörper geschaffen, weshalb die Fertigungstoleranzen vergleichsweise groß gewählt werden können. Zudem ist eine Relativbewegung der Kamera bezüglich der Kappe ermöglicht.

Vorzugsweise ist der Bereich zwischen den ersten Kühlrippen und den zweiten Kühlrippen frei von einer Flüssigkeit. Insbesondere ist zwischen den ersten und den zweiten Kühlrippen mit Ausnahme von Umgebungsluft kein weiteres Fluid vorhanden. Auf diese Weise kann das Assistenzsystem vergleichsweise einfach gefertigt werden. Insbesondere ist das Assistenzsystem frei von einem Gebläse. Mit anderen Worten erfolgt hier die Kühlung der Kamera passiv. Folglich ist kein Betrieb eines Lüfters zur Kühlung erforderlich, weswegen Insassen des Kraftfahrzeugs nicht akustische belästigt werden. Zudem sind die Kosten reduziert und eine Lebensdauer erhöht.

Die Kappe weist einen zweiten Kühlkörper mit zweiten Kühlrippen auf, der vorgesehen und eingerichtet ist, ein Kameragehäuse mit einem ersten Kühlkörper abzudecken. Hierbei sind die zweiten Kühlrippen zumindest teilweise zwischen ersten Kühlrippen des ersten Kühlkörpers angeordnet.

Nachfolgend wird ein Ausführungsbeispiel der Erfindung anhand einer Zeichnung näher erläutert. Darin zeigen:
- Fig. 1: perspektivisch ein Assistenzsystem eines Kraftfahrzeugs von vorne,
- Fig. 2: perspektivisch das Assistenzsystem in einer ersten Schnittdarstellung, und
- Fig. 3: das Assistenzsystem in einer weiteren perspektivischen Schnittdarstellung.

Einander entsprechende Teile sind in allen Figuren mit den gleichen Bezugszeichen versehen.

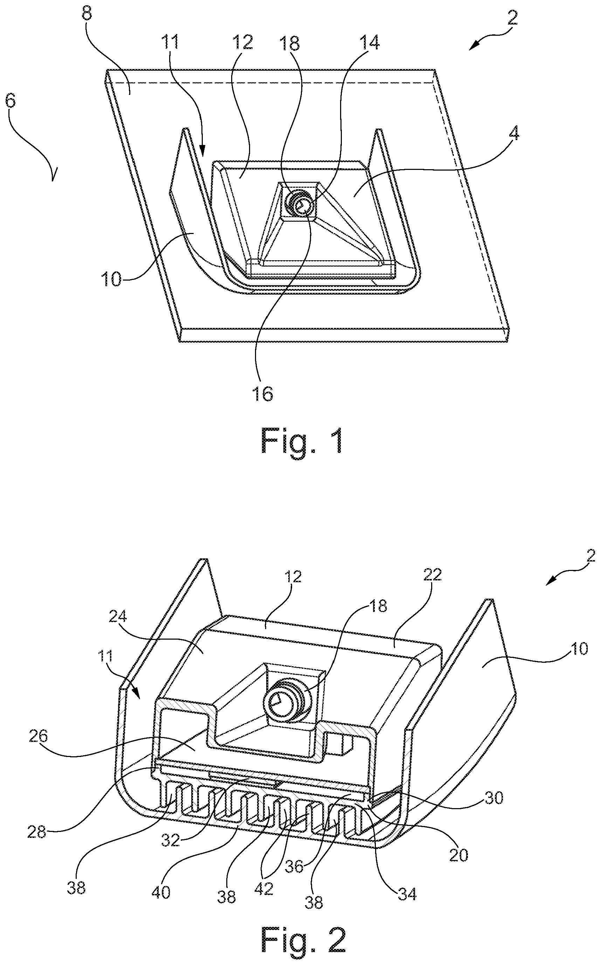

In Fig. 1 ist perspektivisch von vorne ein Assistenzsystem 2 eines Kraftfahrzeugs dargestellt. Das Assistenzsystem 2 dient hierbei der Verkehrszeichenerkennung. Hierfür umfasst das Assistenzsystem 2 eine nicht näher dargestellte Anzeigeneinheit oder eine Verbindung zu einem Multifunktionsdisplay in einem Cockpit des Kraftfahrzeugs. Das Assistenzsystem 2 umfasst ferner eine Kamera 4, die in einem Innenraum 6 des Kraftfahrzeugs hinter einer Frontscheibe 8 positioniert ist. die Kamera 4 selbst ist mittels einer Kappe 10 abgedeckt, so dass die Kamera vollständig mittels der Kappe 10 und der Frontscheibe 8 umgeben ist, wobei zwischen der Kappe 10 und der Kamera 4 ein Spalt 11 gebildet ist. Die Außenseite der Kappe 10 ist entsprechend dem Interieur des Innenraums 6 gestaltet. Hierfür ist die Außenfarbe der Kappe 10 gleich der eines Dachhimmels des Kraftfahrzeugs. Die Kamera 4 weist ein Kameragehäuse 12 sowie ein Optikmodul 14 mit einem Objektiv 16 auf, das teilweise in einer Öffnung 18 des Kameragehäuses 12 positioniert ist. Hierbei weist das Objektiv 16 in Richtung der Frontscheibe 8, sodass eine Erfassung des Bereichs vor dem Kraftfahrzeug mittels der Kamera 4 möglich ist.

In Fig. 2 ist das Assistenzsystem 2 in einer Schnittdarstellung senkrecht zur Längsrichtung des Kraftfahrzeugs gezeigt. Das Kameragehäuse 12 weist eine erste Gehäusehälfte 20 und eine zweite Gehäusehälfte 22 auf, wobei die Öffnung 18 in die zweite Gehäusehälfte 22 eingebracht ist. Zudem ist die zweite Gehäusehälfte 22 mit zumindest einer Anlagefläche 24 in direktem mechanischem Kontakt mit der Frontscheibe 8 oder einer nicht dargestellten Halteplatte.

Zwischen der ersten Gehäusehälfte 20 und der zweiten Gehäusehälfte 22 ist eine Leiterplatte 26 innerhalb des Kameragehäuses 12 klemmfixiert. Hierbei liegt die Leiterplatte 26 in deren Randbereich auf einem in Richtung der zweiten Gehäusehälfte 22 weisenden Steg 28 der ersten Gehäusehälfte 20 auf. Die Leiterplatte 26 und der Steg 28 werden mittels eines Kragens 30 der zweiten Gehäusehälfte 22 umgriffen, was die Leiterplatte 26 stabilisiert. Auf der der zweiten Gehäusehälfte 22 abgewandten Seite der Leiterplatte 26 ist an dieser ein mit Wärmeleitpaste versehener Prozessor 32 montiert. Folglich ist der Prozessor 32 an die erste Gehäusehälfte 20 thermisch angebunden, die in diesem Bereich als ein erster Kühlkörper 34 ausgebildet ist. Der erste Kühlkörper 34 weist eine der zweiten Gehäusehälfte 22 zugewandten Platte 36 auf, mit der die Wärmeleitpaste in direktem mechanischem Kontakt ist. An der Platte 36 sind erste Kühlrippen 38 angeformt, die von der zweiten Gehäusehälfte 22 in Richtung der Kappe 10 gerichtet sind und in Längsrichtung des Kraftfahrzeugs verlaufen. Infolgedessen ist der Querschnitt der ersten Gehäusehälfte 20 im Wesentlichen kammförmig.

Die einstückige Kappe 10 weist an deren der Kamera 4 und der Frontscheibe 8 zugewandten Innenseite einen zweiten Kühlkörper 40 mit ebenfalls in Längsrichtung des Kraftfahrzeugs verlaufenden zweiten Kühlrippen 42 auf. Folglich verlaufen die zweiten Kühlrippen 42 parallel zu den ersten Kühlrippen 38. Die zweiten Kühlrippen 42 sind zwischen den ersten Kühlrippen 38 angeordnet. Somit greifen die beiden Kühlkörper 34, 40 ineinander. Hierbei sind die äußersten der zweiten Kühlrippen 42 mittels jeweils zweien der ersten Kühlrippen 38 umschlossen. Die ersten Kühlrippen 38 sind von den zweiten Kühlrippen beabstandet, was einen Toleranzausgleich schafft, weswegen die Montage des Assistenzsystems 2 erleichtert ist.

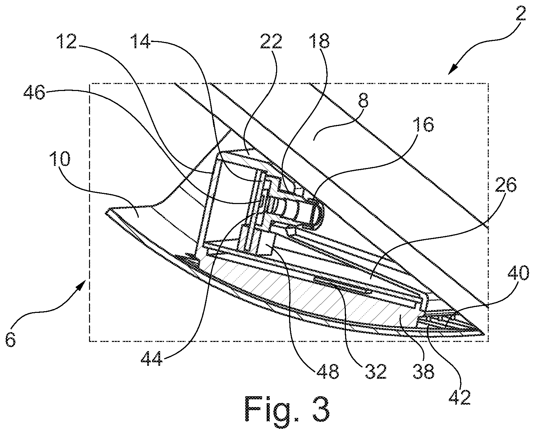

In Fig. 3 ist das Assistenzsystem 2 perspektivisch in einer Schnittdarstellung entlang der Längsachse des Kraftfahrzeugs gezeigt. Das Optikmodul 14 weist eine weitere Leiterplatte 44 auf, auf der ein Bildsensor 46 in Form eines CMOS-Chips montiert ist. Der Bildsensor 46 ist mittels des Objektivs 16 abgedeckt und auf diese Weise gegen Streulicht oder Fremdpartikel geschützt. Mit anderen Worten befindet sich der Bildsensor 46 zwischen der weiteren Leiterplatte 44 und dem Objektiv 16. Mittels der weiteren Leiterplatte 44 erfolgt das Auslesen der mittels des Bildsensors 46 erzeugten elektrischen Spannung. Die weitere Leiterplatte 44 umfasst nicht gezeigte in Kontaktstellen endende Leiterbahnen, wobei die Kontaktstellen innerhalb einer Buchse 48 einliegen, die auf der Leiterplatte 26 montiert ist.

Zur Montage des Assistenzsystems 2 wird zunächst der Bildsensor 46 sowie das Objektiv 16 an der weiteren Leiterplatte 44 montiert. In einem zeitlich hierzu parallelen Schritt wird die Leiterplatte 26 mit dem Prozessor 32 und der Buchse 48 sowie die erste Gehäusehälfte 20 als auch die zweite Gehäusehälfte 22 erstellt. In einem sich hieran anschließenden Arbeitsschritt wird die weitere Leiterplatte 46 in die Buchse 48 gesteckt und das Objektiv 16 in die Öffnung 18 der zweiten Gehäusehälfte 22 eingeführt. Daran anschließend wird der Prozessor 32 mit Wärmeleitpaste bestrichen und die erste Gehäusehälfte 20 zur Erstellung des Kameragehäuses 12 an der zweiten Gehäusehälfte 22 angebunden. Hieran anschließend wird die Kamera 4 an der Frontscheibe 8 befestigt und mittels der Kappe 10 abgedeckt, wobei die ersten Kühlrippen 38 und die zweiten Kühlrippen 42 ineinander greifen.

Bei Betrieb des Assistenzsystems 2 wird mittels des Objektivs 16 die Umgebung auf dem Bildsensor 46 abgebildet und von diesem erfasst, wobei das Auslesen des Bildsensors 46 mittels der weiteren Leiterplatte 44 erfolgt. Diese ausgelesenen Signale werden über die Buchse 48 dem Prozessor 32 zur Verfügung gestellt und mittels dessen verarbeitet. Die hierbei entstehende Verlustwärme wird über die erste Gehäusehälfte 20 an die Kappe 10 abgegeben. Von der Kappe 10 gelangt die Wärme in den Innenraum 6, der mittels einer Klimaanlage des Kraftfahrzeugs auf einer bestimmten Temperatur gehalten wird. Auch bei einer Sonneneinstrahlung durch die Frontscheibe 8 und einer folglichen zusätzlichen Erwärmung des Kameragehäuses 12 wird die Kamera 4 aufgrund der ineinander greifenden Kühlrippen 38, 42 ausreichend gekühlt, sodass auch ein Betrieb des Kraftfahrzeugs in einem vergleichsweise heißen Land ermöglicht ist.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Assistenzsystem
- 4: Kamera
- 6: Innenraum
- 8: Frontscheibe
- 10: Kappe
- 11: Spalt
- 12: Kameragehäuse
- 14: Optikmodul
- 16: Objektiv
- 18: Öffnung
- 20: erste Gehäusehälfte
- 22: zweite Gehäusehälfte
- 24: Anlagefläche
- 26: Leiterplatte
- 28: Steg
- 30: Kragen
- 32: Prozessor
- 34: erster Kühlkörper
- 36: Platte
- 38: erste Kühlrippe
- 40: zweiter Kühlkörper
- 42: zweite Kühlrippe
- 44: Leiterplatte
- 46: Bildsensor
- 48: Buchse

## Patentansprüche

1. Assistenzsystem (2) eines Kraftfahrzeugs, mit einer ein Kameragehäuse (12) aufweisenden Kamera (4), die mittels einer Kappe (10) abgedeckt ist, **dadurch gekennzeichnet, dass** das Kameragehäuse (12) einen ersten Kühlkörper (34) mit ersten Kühlrippen (38) und die Kappe (10) einen zweiten Kühlkörper (40) mit zweiten Kühlrippen (42) umfasst, und wobei die zweiten Kühlrippen (42) zumindest teilweise zwischen den ersten Kühlrippen (38) angeordnet sind.

2. Assistenzsystem (2) nach Anspruch 1,
**dadurch gekennzeichnet,**
**dass** die ersten Kühlrippen (38) parallel zu den zweiten Kühlrippen (42) angeordnet sind.

3. Assistenzsystem (2) nach Anspruch 1 oder 2,
**dadurch gekennzeichnet,**
**dass** der erste Kühlkörper (34) mittels einer ersten Gehäusehälfte (20) des Kameragehäuses (12) gebildet ist.

4. Assistenzsystem (2) nach Anspruch 3,
**dadurch gekennzeichnet,**
**dass** eine Leiterplatte (26) innerhalb des Kameragehäuses (12) angeordnet ist, die an der ersten Gehäusehälfte (20) anliegt.

5. Assistenzsystem (2) nach Anspruch 4,
**dadurch gekennzeichnet,**
**dass** die Leiterplatte (26) zwischen der ersten Gehäusehälfte (20) und einer zweiten Gehäusehälfte (22) klemmfixiert ist.

6. Assistenzsystem (2) nach Anspruch 4 oder 5,
**dadurch gekennzeichnet,**
**dass** ein Optikmodul (14) in eine auf der Leiterplatte (26) montierte Buchse (48) gesteckt ist.

7. Assistenzsystem (2) nach einem der Ansprüche 1 bis 6,
**dadurch gekennzeichnet,**
**dass** die Kappe (10) einstückig ist.

8. Assistenzsystem (2) nach einem der Ansprüche 1 bis 7,
**dadurch gekennzeichnet,**
**dass** die ersten Kühlrippen (38) zu den zweiten Kühlrippen (42) beabstandet sind.

9. Assistenzsystem (2) nach Anspruch 8,
**dadurch gekennzeichnet,**
**dass** der Bereich zwischen den ersten Kühlrippen (38) und den zweiten Kühlrippen (42) frei von einer Flüssigkeit ist.

## Claims

1. An assistance system (2) for a motor vehicle with a camera (4) having a camera body (12), said camera (4) being covered by means of a cap (10), **characterised in that** the camera body (12) comprises a first heat sink (34) with first cooling ribs (38) and the cap (10) comprises a second heat sink (40) with second cooling ribs (42), and wherein the second cooling ribs (42) are at least partially arranged between the first cooling ribs (38).

2. The assistance system (2) according to Claim 1,
**characterised in**
**that** the first cooling ribs (38) are arranged parallel to the second cooling ribs (42).

3. The assistance system (2) according to Claim 1 or 2,
**characterised in**
**that** the first heat sink (34) is formed by means of a first body half (20) of the camera body (12).

4. The assistance system (2) according to Claim 3,
**characterised in**
**that** a printed circuit board (26) is arranged within the camera body (12), said printed circuit board (26) being in contact with the first body half (20).

5. The assistance system (2) according to Claim 4,
**characterised in**
**that** the printed circuit board (26) is clamped between the first body half (20) and a second body half (22).

6. The assistance system (2) according to Claim 4 or 5,
**characterised in**
**that** an optical module (14) is plugged into a socket (48) mounted on the printed circuit board (26).

7. The assistance system (2) according to any one of Claims 1 to 6,
**characterised in**
**that** the cap (10) is integral.

8. The assistance system (2) according to any one of Claims 1 to 7,
**characterised in**
**that** the first cooling ribs (38) are spaced apart from the second cooling ribs (42).

9. The assistance system (2) according to Claim 8,
**characterised in**
**that** the area between the first cooling ribs (38) and the second cooling ribs (42) is free from a liquid.

## Revendications

1. Système d'assistance (2) d'un véhicule, avec une caméra (4) présentant un boîtier de caméra (12), laquelle est recouverte au moyen d'un capuchon (10), **caractérisé en ce que** le boîtier de caméra (12) comprend un premier corps de refroidissement (34) avec de premières ailettes de refroidissement (38) et le capuchon (10) comprend un deuxième corps de refroidissement (40) avec de deuxièmes ailettes de refroidissement (42), et les deuxièmes ailettes de refroidissement (42) étant disposées au moins partiellement entre les premières ailettes de refroidissement (38).

2. Système d'assistance (2) selon la revendication 1,
**caractérisé en ce que**
les premières ailettes de refroidissement (38) sont disposées parallèlement aux deuxièmes ailettes de refroidissement (42).

3. Système d'assistance (2) selon la revendication 1 ou 2,
**caractérisé en ce que**
le premier corps de refroidissement (34) est formé au moyen d'une première moitié de boîtier (20) du boîtier de caméra (12).

4. Système d'assistance (2) selon la revendication 3,
**caractérisé en ce qu'**
un circuit imprimé (26) est disposé à l'intérieur du boîtier de caméra (12), lequel circuit est placé contre la première moitié de boîtier (20).

5. Système d'assistance (2) selon la revendication 4,
**caractérisé en ce que**
le circuit imprimé (26) est fixé par coincement entre la première moitié de boîtier (20) et la deuxième moitié de boîtier (22).

6. Système d'assistance (2) selon la revendication 4 ou 5,
**caractérisé en ce qu'**
un module optique (14) est inséré dans une douille (48) montée sur le circuit imprimé (26).

7. Système d'assistance (2) selon l'une des revendications 1 à 6,
**caractérisé en ce que**
le capuchon (10) est d'un seul tenant.

8. Système d'assistance (2) selon l'une des revendications 1 à 7,
**caractérisé en ce que**
les premières ailettes de refroidissement (38) sont disposées à distance des deuxièmes ailettes de refroidissement (42).

9. Système d'assistance (2) selon la revendication 8,
**caractérisé en ce que**
la zone entre les premières ailettes de refroidissement (38) et les deuxièmes ailettes de refroidissement (42) est dépourvue de liquide.
